# EUROPEAN PATENT SPECIFICATION

(11) **EP 3 442 260 B1**
(45) Date of publication and mention of the grant of the patent: **28.07.2021**
(21) Application number: 17778556.5
(22) Date of filing: 20.02.2017
(51) Int. Cl.: H04L 29/08, H04W 28/14

(54) **PROCESSING METHOD FOR USER TEXT-AWARE SERVICE AND NETWORK DEVICE**
VERARBEITUNGSVERFAHREN FÜR BENUTZERTEXTBEWUSSTEN DIENST UND NETZWERKVORRICHTUNG
PROCÉDÉ DE TRAITEMENT D'UN SERVICE SENSIBLE À UN TEXTE D'UTILISATEUR, ET DISPOSITIF DE RÉSEAU

(30) Priority: 08.04.2016 CN 201610219262
(43) Date of publication of application: 13.02.2019
(73) Proprietor: ZTE Corporation, Shenzhen, Guangdong 518057 (CN)
(72) Inventor: GAO, Yin, Shenzhen Guangdong 518057 (CN); HUANG, He, Shenzhen Guangdong 518057 (CN)
(74) Representative: Lavoix
(86) International application number: PCT/CN2017/074123
(87) International publication number: WO 2017/173891

(56) References cited:
- EP-A1- 2 953 400
- CN-A- 102 148 752
- CN-A- 103 430 516
- CN-A- 103 685 547
- US-A1- 2013 121 324
- US-A1- 2014 219 179
- US-B2- 8 942 178

## Description

### TECHNICAL FIELD

The application relates, but is not limited, to the field of mobile communications, and in particular to two inter-related methods for processing a User Equipment (UE) text-aware service, a core network device and a system.

### BACKGROUND

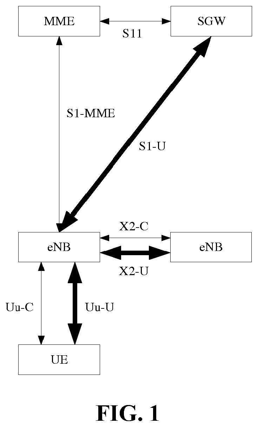

FIG. 1 is a schematic diagram of the overall architecture of a Long Term Evolution (LTE) system. As shown in FIG. 1, an LTE architecture includes: a Mobility Management Entity (MME), a Serving Gateway (SGW), UE or a terminal, and an eNodeB (eNB). A UU interface is between the UE or the terminal and the eNB, an S1-MME interface is between the eNB and the MME, an S1-U interface is between the eNB and the SGW, and an X2-User plane (X2-U) interface and an X2-Control plane (X2-C) interface are between the eNBs. In the LTE system, a protocol stack of the S1-MME interface is divided, from the bottom to the top, into the following several protocol layers: an L1 protocol, an L2 protocol, an Internet Protocol (IP), a Stream Control Transmission Protocol (SCTP), and an S1-Application Protocol (S1-AP). In the LTE system, the protocol stack of the S1-U interface is divided, from the bottom to the top, into the following several protocol layers: the L1 protocol, the L2 protocol, a User Data Protocol/IP (UDP/IP), and a GPRS Tunneling Protocol-User plane (GTP-U).

In the meantime, with the development of communication technologies, in the Internet of Things era, billions of billons items need to access to the Web. Different terminals have different requirements for services when accessing mobile networks, and there are conditions that it is allowed to use software to develop a local access network with local content and real-time information. A service model in an operator network evolves from single voice and short message services to diverse Internet services. A diverse service model brings a new challenge to network operation and maintenance optimization of operator. How to guarantee service embodiment of the diverse services and satisfy awareness demands of users will become a key problem of competition between the operators in future.

A Content Delivery Network (CDN) technology distributes the content of a site to a network "edge" (edge server) which is closest to a piece of UE by adding a new network architecture in the existing Internet, so that the UE may get the required content. The CDN technology solves the condition of Internet network congestion, and increases the response speed of a site that the UE visits. Moreover, the CDN technology totally solves the problem of the low response speed of the site that the UE visits technologically. The problem is caused by narrow network bandwidth, a large number of UE visits, uneven network distribution, and so on. The CDN architecture is mainly composed of two parts, namely center and edge. The center is a CDN network management center and a Domain Name System (DNS) redirection resolution center, which take charge of global load balancing, and whose device system is installed in a computer room of the management center. The edge is mainly a remote node. A carrier distributed by the CDN is mainly composed of a cache and a load balancer.

In short, the CDN is a total system deployed strategically, including four essential conditions, namely distributed storage, load balancing, redirection of network requests, and content management. After a CDN service is used, an access process of the UE includes the following steps.

At S1, a piece of UE provides a domain name of a site to be visited to a browser, and a request for domain name resolution is sent to the DNS of the site.

At S2, because the DNS of the site sets a CNAME for the resolution of the domain name, the request is pointed to an intelligent DNS load balancing system in the CDN.

At S3, the intelligent DNS load balancing system performs intelligent resolution to the domain name, and returns an IP address of a node with the highest response speed to the UE.

At S4, after obtaining the IP address of the node with the highest response speed, the browser sends a visit request to a CDN node.

At S5, because it is the first visit, the CDN node goes back to a source site to fetch data required by the UE, and then sends the data to the UE.

At S6, when other UE visits the same content again, the CDN directly returns the data to the UE, and then a request/service process is completed.

The above process is only applied to IP data, but cannot be applied to a service management model under the existing 3rd Generation Partnership Project (3GPP) system.

Document US 8 942 178 discloses a method and system which supports subscriber based IP data breakout at the edge of a mobile data network without monitoring the use of security keys or breaking into ciphered message exchanges.

Document US 2013/121324 discloses mobile network services performed in a mobile data network in a way that is transparent to most of the existing equipment in the mobile data network. The mobile data network includes a radio access network and a core network. An edge caching mechanism is provided within a base station to perform caching of data at the edge of the mobile data network. The edge caching mechanism analyzes historical usage data that indicates historical accesses to the base station. Data patterns in the historical usage data may be used to define cache load criteria, and to optionally define cache flush criteria. This architecture allows caching of data at the edge of a mobile data network within the infrastructure of an existing mobile data network.

### SUMMARY

The invention is set out in the appended set of claims.

Other aspects may be understood after the accompanying drawings and detailed descriptions are read and understood.

### BRIEF DESCRIPTION OF DRAWINGS

FIG. 1 is a schematic diagram of the overall architecture of an LTE system.
FIG. 2 is a schematic diagram of a system architecture in an application scenario according to an embodiment of the disclosure.
FIG. 3 is a partial flowchart of a method for processing a UE text-aware service at an independent GW side according to an embodiment of the disclosure.
FIG. 4 is a partial flowchart of a method for processing a UE text-aware service at an RAN side according to an embodiment of the disclosure.
FIG. 5 is a partial flowchart of a method for processing a UE text-aware service at a core network side according to an embodiment of the disclosure.
FIG. 6 is a partial flowchart of a first embodiment of the disclosure.
FIG. 7 is a partial flowchart of a second embodiment of the disclosure.
FIG. 8 is a partial flowchart of a third embodiment of the disclosure.
FIG. 9 is a schematic diagram of a network device.
FIG. 10 is a schematic diagram of a network node at an RAN side.
FIG. 11 is a schematic diagram of a core network device according to an embodiment of the disclosure.

### DETAILED DESCRIPTION

The embodiments of the disclosure are elaborated below in combination with the accompanying drawings. It is to be noted that the embodiments in the application and the characteristics in the embodiments can be combined under the condition of no conflicts.

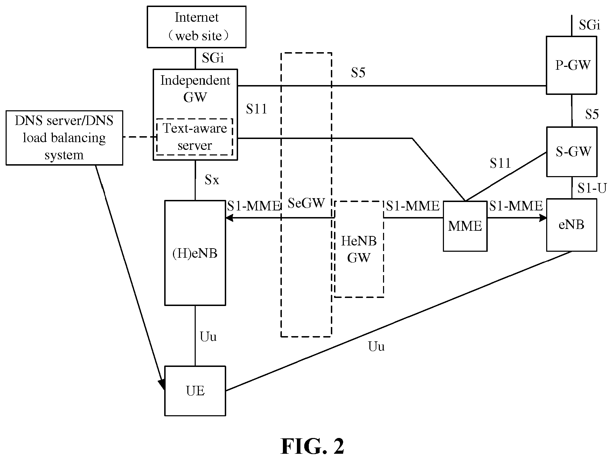

FIG. 2 shows a possible application scenario of the following embodiment. A UE text-aware server may be deployed on an independent GW node, or the independent GW may implement a function of a UE text-aware service, or the UE text-aware server may also be deployed separately. A network node at an RAN side may be either an eNB, a HeNB, a host eNB, etc. in a 4G system, or an access network node in a 5G system. A node at the core network side may be either a MME in the 4G system, or a core network node in the 5G system. The following system architecture takes an LTE communication system for example, but is not limited to the LTE system.

As shown in FIG. 2, there is a direct interface (new interface) between the network node at the RAN side and the independent GW, which may implement at least one of a user plane function and a control plane function. The independent GW has the functions of both a serving GW and a data GW which implement a UE text-aware service.

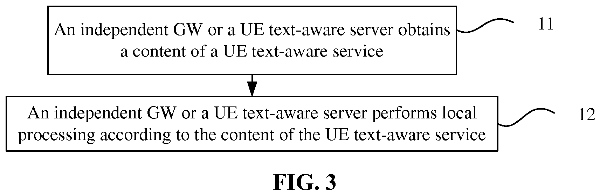

When a piece of UE initiates a WEB page request, a DNS server resolves an address, may interact with a DNS load balancing system, and indicates, according to the address or the load, an IP address of the independent GW/the UE text-aware server to the UE; and then the UE visits a respective WEB site (Internet) through the IP address, thereby realizing traffic offloading. FIG. 3 is a partial flowchart of a method for processing a UE text-aware service at an independent GW side according to an embodiment of the disclosure. As shown in FIG. 3, the method of the present embodiment includes the following steps.

At step 11, the independent GW or a UE text-aware server obtains a content of the UE text-aware service. The content of the UE text-aware service includes at least one of data of the UE text-aware service or information of the UE text-aware service.

At step 12, the local processing is performed according to the content of the UE text-aware service.

The independent GW or the UE text-aware server obtains the information of the UE text-aware service includes the followings.

After receiving an interface establishing request from the network node at the RAN side, the independent GW or the UE text-aware server establishes the direct interface with the network node at the RAN side; and the information of the UE text-aware service is obtained through the direct interface.

The independent GW or the UE text-aware server obtains the data of the UE text-aware service includes the followings.

After receiving a service request of UE, the independent GW or the UE text-aware server obtains data corresponding to the service request of UE from an Internet network source site, and performs local caching.

The UE text-aware service in the application is a UE service which implements one or more of local caching, local offloading, and local switching by processing through the independent GW or the UE text-aware server.

The method in the embodiment may provide different service requirements aiming at access mobile networks of different service types initiated by different terminals. In the meantime, traffic offloading may be implemented by deploying the UE text-aware server or implementing a UE text-aware function on the independent GW, thereby lightening a processing load of the core network. Therefore realizing the UE text-aware system in the 3GPP mobile communication network may satisfy the combination of the mobile networks and the big data, guarantee the service embodiment of diverse services, meet the awareness demands of users, and reduce operation costs.

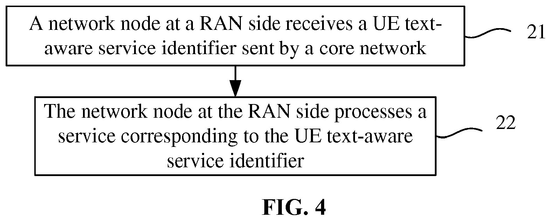

FIG. 4 is a partial flowchart of a method for processing a UE text-aware service at an RAN side according to an embodiment of the disclosure. As shown in FIG. 4, the method of the present embodiment includes the following steps.

At step 21, a network node at the RAN side receives a UE text-aware service identifier sent by the core network.

At step 22, the network node at the RAN side processes a service corresponding to the UE text-aware service identifier.

The network node at the RAN side processes the service corresponding to the UE text-aware service identifier in step 22 includes the followings.

After receiving the IP address of the independent GW or of the UE text-aware server which are sent by the core network, the network node at the RAN side sends the interface establishing request to the independent GW or the UE text-aware server, and establishes the direct interface with the independent GW or the UE text-aware server; and the network node at the RAN side sends information of a UE text-aware service to the independent GW or the UE text-aware server through the direct interface.

The network node at the RAN side may identify, through the UE text-aware service identifier, that the service is the UE text-aware service, so that it may perform targeted processing on local resource scheduling and allocation, for example, orientation and priority of resources. After obtaining a certain borne UE text-aware service identifier for the first time, the Network node at the RAN side saves it locally, so that it may be identified in the subsequent processing.

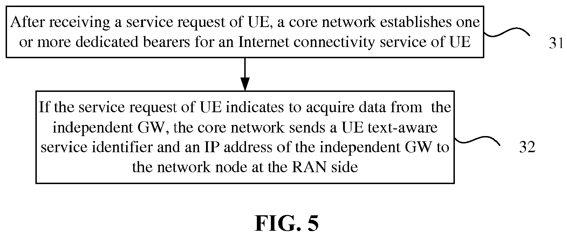

FIG. 5 is a partial flowchart of a method for processing a UE text-aware service at a core network side according to an embodiment of the disclosure. As shown in FIG. 5, the method of the present embodiment includes the following steps.

At step 31, after receiving a service request of UE, a core network device establishes one or more dedicated bearers for an Internet connectivity service of UE.

At step 32, if the service request of UE indicates a service which implements offloading through an independent GW or the UE text-aware server, the core network device sends a UE text-aware service identifier and an IP address of the independent GW or of a UE text-aware server to a network node at a RAN side.

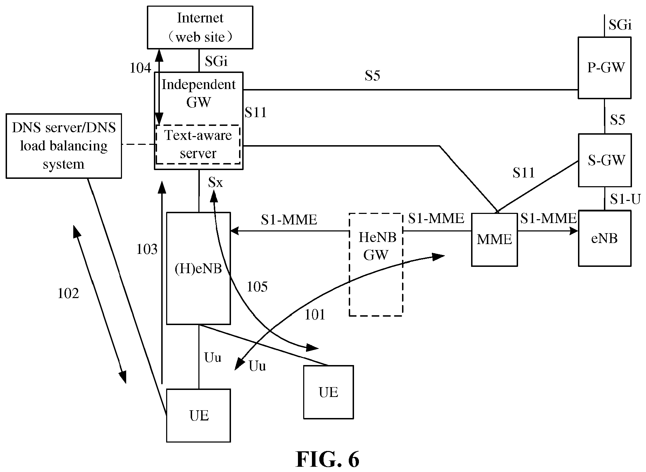

FIG. 6 shows a schematic diagram of a partial flow of establishing a UE text-aware service. The flow includes the following steps.

At step 101, after receiving a service request of UE, a core network establishes one or more dedicated bearers for all the Internet connectivity services of UE (the flow of establishing the existing SIPTO@LN may be followed), so as to offload all the Internet connectivity services of UE to an independent GW.

If the service request of UE indicates the service which implements offloading through the independent GW or a UE text-aware server, the core network creates a UE text-aware service identifier, and sends the UE text-aware service identifier and the IP address of the independent GW or of the UE text-aware server to the network node at the RAN side. In this way, the network node at the RAN side may obtain the IP address of the independent GW/the UE text-aware server from the node at the core network side.

In the embodiment, UE auxiliary information (for example, service preference, service popularity, Uniform Resource Identifier (URI), etc.), namely service information, which may be provided by the UE, may be reported to the node at the core network side through an Non-access Stratum (NAS) and provided to the independent GW through an internal interface of the core network.

After obtaining the UE auxiliary information, the independent GW may implement locally the QoS management of the UE text-aware service and the management of the scheduling policy.

At step 102, a browser receives the WEB page request initiated by the UE, a DNS server resolves an address, may interact with a DNS load balancing system, and indicates, according to the address or the load, the IP address of the independent GW/the UE text-aware server to the UE.

At step 103, after obtaining the IP address of the independent GW, the browser initiates a visit request to the UE text-aware server on the independent GW.

At step 104, the UE text-aware server obtains the data required by the UE from an Internet network source site and caches the data locally.

At step 105, other UE may obtain locally the data from the independent GW when visiting the same address.

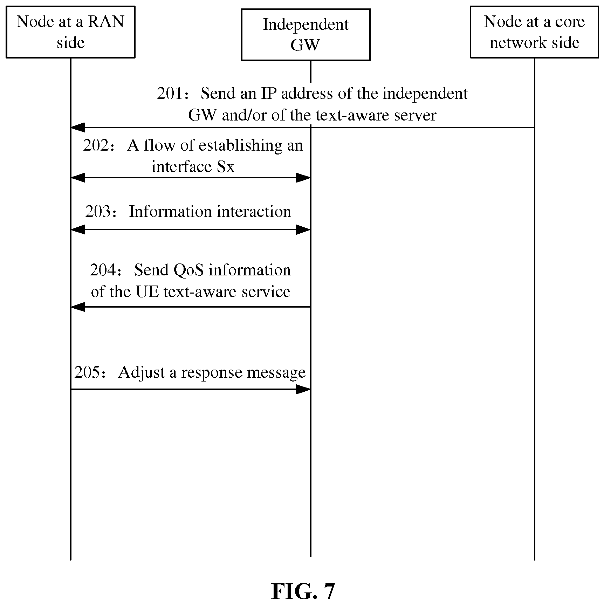

As shown in FIG. 7, the method for processing UE information in the embodiment includes among others the following steps.

At step 201, in a first embodiment, a network node at a RAN side obtains an IP address of an independent GW/a UE text-aware server from a node at a core network side through S101.

At step 202, a direct interface Sx between the network node at the RAN side and the independent GW/the UE text-aware server is established.

At step 203, the UE text-aware server obtains, through the interface, one or more of the following information: information of the current UE text-aware service, and cell information of the UE which is serving by the network node at the RAN side. The information of the current UE text-aware service includes, for example, the maximum/minimum uplink and downlink rate of the service, average service traffic, and activeness of the service. The cell information includes, for example, a cell load and a cell throughput.

At step 204, the UE text-aware server adjusts QoS parameters for the current UE text-aware service, and sends, through the Sx interface, the adjusted QoS parameters of the UE text-aware service to the network node at the RAN side.

The QoS parameters include, but are not limited to, at least one of UE AMBR (which is applied to non-GBR bearing, and includes uplink and downlink), bearing mark information, bearing QoS parameters (for example, QoS Class Identifier (QCI), Allocation and Retention Priority (ARP), QoS information of GBR UE (the maximum uplink and downlink rate, and the guaranteed uplink and downlink rate)), or IP data flow information of the UE.

At step 205, the network node at the RAN side processes local data transmission resources according to the received QoS parameters of the UE text-aware service, and sends a response message to the independent GW.

In an embodiment, the network node at the RAN side may also negotiate the QoS parameters of the UE text-aware service with the independent GW.

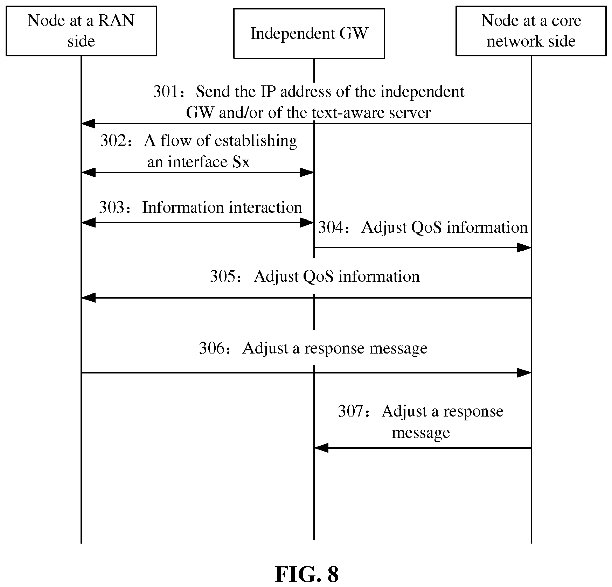

As shown in FIG. 8, the method for processing a UE text-aware service in the embodiment includes among others the following steps.

At step 301, in a first embodiment, a network node at a RAN side obtains an IP address of an independent GW/a UE text-aware server from a node at a core network side through S101.

At step 302, the direct interface Sx between the network node at the RAN side and the independent GW/the UE text-aware server is established.

At step 303, the UE text-aware server obtains, through the interface, one or more of the following information: information of the current UE text-aware service, and cell information of a UE which is serving by the network node at the RAN side. The information of the current UE text-aware service includes, for example, the maximum/minimum uplink and downlink rate of the service, average service traffic, and activeness of the service. The cell information includes, for example, a cell load and a cell throughput.

At step 304, the UE text-aware server adjusts QoS parameters for the current UE text-aware service, and sends, through the interface between the UE text-aware server and the nodes at the core network side, the adjusted QoS parameters of the UE text-aware service to the nodes at the core network side.

The QoS parameters include, but are not limited to, at least one of the following information: UE AMBR (which is applied to non-GBR bearing, and includes uplink and downlink), bearing mark information, bearing QoS parameters (for example, QCI, ARP, QoS information of GBR UE (the maximum uplink and downlink rate, and the guaranteed uplink and downlink rate)), or IP data flow information of the UE.

At step 305, the node at the core network side initiates a flow of modifying the UE text-aware service to the node at the RAN side, including the QoS parameters of the UE text-aware service.

At step 306, the network node at the RAN side processes the local data transmission resources according to the received QoS parameters of the UE text-aware service, and sends the response message to the node at the core network side.

In an embodiment, the network node at the RAN side may also negotiate the QoS parameters of the UE text-aware service with the node at the core network side.

At step 307, the node at the core network side sends to the independent GW a response indication about adjusting the QoS parameters of the UE text-aware service or the adjusted QoS parameters of the UE text-aware service.

A scheduling policy is configured on an independent GW or a UE text-aware server. The method for processing a UE text-aware service includes among others the following steps.

At S401, in a first embodiment, a network node at a RAN side obtains an IP address of the independent GW/the UE text-aware server from a node at a core network side through S101.

At S402, the direct interface Sx between the network node at the RAN side and the independent GW/the UE text-aware server is established.

At S403, the UE text-aware server obtains, through the interface, one or more of the following information: information of current UE text-aware service, and cell information of the UE which is serving by a network node at the RAN side. The information of the current UE text-aware service includes, for example, the maximum/minimum uplink and downlink rate of the service, average service traffic, and activeness of the service. The cell information includes, for example, a cell load and a cell throughput.

At S404, the UE text-aware server adjusts the scheduling policy according to the above information, and sends the adjusted scheduling policy to the network node at the RAN side through the Sx interface.

For example, for a service having a high requirement on delay, if QoS cannot be guaranteed in a period of time, the scheduling policy may be adjusted to improve a QoS requirement of the service. For example, for a downloading service, when the cell load is too heavy, it is possible to adjust the scheduling policy to reduce the QoS requirement of the service, or even suspend the service.

At S405, the network node at the RAN side schedules local resources according to the received scheduling policy, and sends a response message to the independent GW.

A scheduling policy is not configured on an independent GW or a UE text-aware server the scheduling policy is obtained from a core network using a method that includes among others the following steps.

At S501, UE initiates a service creating request.

At S502, a eNB sends a service creating request to a core network through an uplink NAS message.

At S503, the core network allocates the resources of the core network side according to the service creating request of the UE, and determines whether to create a text-aware service for the UE.

At S504, the core network sends an initial text creating or bearer creating request message of the UE to the eNB. The message may include a mark indicating whether the bearer is the UE text-aware service. Moreover, the scheduling policy of the UE text-aware service may be included in the message.

At S505, the node at the core network side may send the scheduling policy of the UE text-aware service to the independent GW.

In the embodiments of the disclosure, the network node at the RAN side may be either an eNB, a HeNB or a host eNB in the 4G system, or an access network node in the 5G system. The node at the core network side may be either a MME in the 4G system, or a core network node in the 5G system.

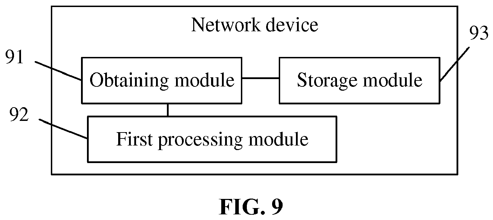

FIG. 9 is a schematic diagram of a network device. As shown in FIG. 9, the network device is an independent GW or a UE text-aware server. The network device includes an obtaining module 91 and a first processing module 92.

The obtaining module 91 is configured to obtain the content of a UE text-aware service. Here, the content of the UE text-aware service includes at least one of data of the UE text-aware service or information of the UE text-aware service.

The first processing module 92 is configured to perform the local processing according to the content of the UE text-aware service.

In an embodiment, the obtaining module 91 is configured to obtain the information of the UE text-aware service through a direct interface established with a network node at a RAN side.

In an embodiment, the first processing module 92 is configured to perform the local processing according to the information of the UE text-aware service, includes at least one of the following processing modes: adjusting a scheduling policy according to the information of the UE text-aware service, and sending the adjusted scheduling policy to the network node at the RAN side; and adjusting QoS parameters according to the information of the UE text-aware service, and sending the adjusted QoS parameters to the network node at the RAN side or a core network.

In an embodiment, the obtaining module 91 is configured to obtain the information of the UE text-aware service includes that: the obtaining module 91 obtains UE auxiliary information from the core network.

In an embodiment, the network device may further include a storage module 93.

The obtaining module 91 is configured to obtain, after receiving a service request of UE, data corresponding to the service request of UE from an Internet network source site.

The storage module 93 is configured to cache the data obtained by the obtaining module.

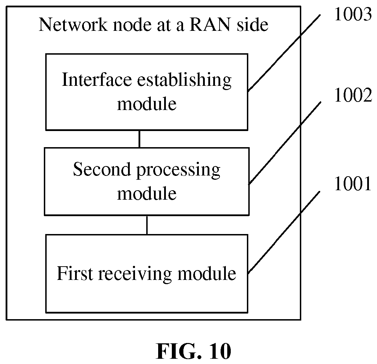

FIG. 10 is a schematic diagram of a network node at a RAN side. As shown in FIG. 10, the network node at the RAN side includes: a first receiving module 1001 and the second processing module 1002.

The first receiving module 1001 is configured to receive a UE text-aware service identifier sent by a core network.

The second processing module 1002 is configured to process a service corresponding to the UE text-aware service identifier.

In an embodiment, the network node at the RAN side may further include an interface establishing module 1003.

The interface establishing module 1003 is configured to receive an IP address of an independent GW or of a UE text-aware server which is sent by a core network, send an interface establishing request to the independent GW or the UE text-aware server, and establish an direct interface with the independent GW or the UE text-aware server.

The second processing module 1002 is configured to process the service corresponding to the UE text-aware service identifier includes that: the second processing module sends, through the direct interface, information of a UE text-aware service corresponding to the UE text-aware service identifier to the independent GW or the UE text-aware server.

The second processing module 1002 is configured to process the service corresponding to the UE text-aware service identifier includes at least one of the followings: receiving a scheduling policy sent by one of the independent GW, the UE text-aware server or the core network, and scheduling local resources according to the scheduling policy; and receiving QoS information sent by one of the independent GW, the UE text-aware server or the core network, and processing local data transmission resources according to the QoS information.

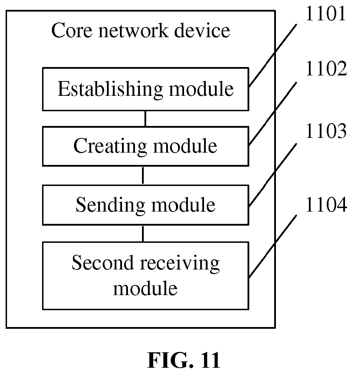

FIG. 11 is a schematic diagram of a core network device according to an embodiment of the disclosure. As shown in FIG. 11, the core network device of the embodiment includes an establishing module 1101, a creating module 1102, and a sending module 1103.

The establishing module 1101 is configured to establish, after receiving a service request of UE, one or more dedicated bearers for an Internet connectivity service of UE.

The creating module 1102 is configured to create, if the service request of UE indicates a service which implements offloading through an independent GW or a UE text-aware server, a UE text-aware service identifier.

The sending module 1103 is configured to send a UE text-aware service identifier and an IP address of the independent GW or of the UE text-aware server to a network node at a RAN side.

In an embodiment, the core network device includes a second receiving module 1104.

The second receiving module 1104 is configured to receive a scheduling policy of the independent GW or the UE text-aware server, or receive QoS information of the independent GW.

The sending module 1103 is further configured to send the scheduling policy to the network node at the RAN side, or send the QoS information to the network node at the RAN side.

The disclosure also provides a computer-readable storage medium storing computer-executable instructions which, when executed by a processor, implements the method for processing a UE text-aware service.

Those of ordinary skill in the art may understand that: all or a part of the steps in the above methods can be completed by instructing related hardware through a computer program. The program may be stored in the computer readable storage medium, for example, an ROM, a magnetic disk, or a compact disk. All or a part of the steps in the above embodiments may also be implemented by using one or more integrated circuits. Correspondingly, each module/unit in the embodiments can be realized in form of either hardware or software function module. The disclosure is not limited to any particular combination of hardware and software.

Although the implementations disclosed by the disclosure are as described above, their contents are the implementations only adopted for facilitating understanding the technical solutions provided by the disclosure, and not intended to limit the application.

### INDUSTRIAL APPLICABILITY

The disclosure provides two inter-related methods for processing a UE text-aware service, a core network device and a system, which may implement traffic offloading by deploying the UE text-aware server or implementing a UE text-aware function on an independent GW, thereby lightening a processing load of a core network. Therefore realizing a UE text-aware system in a 3GPP mobile communication network may satisfy a combination of mobile networks and big data, guarantee the service embodiment of diverse services, meet the awareness demands of users, and reduce operation costs.

## Claims

1. A method for processing a User Equipment, UE, text-aware service, comprising:
obtaining (11), by an independent Gateway, GW, or a UE text-aware server, a content of the UE text-aware service, the content of the UE text-aware service comprising at least one of data of the UE text-aware service or information of the UE text-aware service; and
performing (12), by the independent GW or the UE text-aware server, local processing according to the content of the UE text-aware service;
wherein, the independent GW has functions of both a serving GW and a data GW which implement the UE text-aware service;
the UE text-aware service is a UE service which implements one or more of local caching, local offloading, and local switching by processing through the independent GW or the UE text-aware server; and
obtaining, by the independent GW or the UE text-aware server, the information of the UE text-aware service comprises:
obtaining, by the independent GW or the UE text-aware server, the information of the UE text-aware service through a direct interface established with a network node at a Radio Access Network, RAN, side;
wherein performing, by the independent GW or the UE text-aware server, the local processing according to the information of the UE text-aware service comprises at least one of:
adjusting, by the independent GW or the UE text-aware server, a scheduling policy according to the information of the UE text-aware service, and sending, by the independent GW or the UE text-aware server, the adjusted scheduling policy to the network node at the RAN side; and
adjusting, by the independent GW or the UE text-aware server, quality of service, QoS, parameters according to the information of the UE text-aware service, and sending, by the independent GW or the UE text-aware server, the adjusted QoS parameters to the network node at the RAN side or a core network.

2. The method of claim 1, wherein the QoS parameters comprise at least one of:
UE Aggregate Maximum Bit Rate, UE AMBR, bearing mark information, bearer QoS parameters, Guaranteed Bit Rate, GBR, or UE IP data flow information.

3. The method of claim 1, wherein obtaining, by the independent GW or the UE text-aware server, the information of the UE text-aware service comprises:
obtaining, by the independent GW or the UE text-aware server, UE auxiliary information from a core network.

4. The method of claim 1 or 2, wherein the information of the UE text-aware service comprises at least one of:
a maximum uplink rate of service, a maximum downlink rate of service, a minimum uplink rate of service, a minimum downlink rate of service, average uplink service traffic, average downlink service traffic, activeness of service, and cell information of a UE which is serving by a network node at the RAN side.

5. The method of claim 1, obtaining, by the independent GW or the UE text-aware server, the data of the UE text-aware service comprises:
obtaining, by the independent GW or the UE text-aware server after receiving a request for accessing the UE text-aware service, data corresponding to the request from an Internet network source site, and performing, by the independent GW or the UE text-aware server, local caching.

6. The method of claim 1, further comprising:
receiving (21), by a network node at a Radio Access Network, RAN, side, a UE text-aware service identifier sent by a core network; and
processing (22), by the network node at the RAN side, a service corresponding to the UE text-aware service identifier.

7. The method of claim 6, wherein processing, by the network node at the RAN side, the service corresponding to the UE text-aware service identifier comprises:
receiving, by the network node at the RAN side, an IP address of the independent Gateway, GW, or of the UE text-aware server which is sent by the core network;
sending, by the network node at the RAN side, an interface establishment request to the independent GW or the UE text-aware server, and establishing the direct interface with the independent GW or the UE text-aware server; and
sending, by the network node at the RAN side, the information of the UE text-aware service corresponding to the UE text-aware service identifier to the independent GW or the UE text-aware server through the direct interface.

8. The method of claim 7, wherein processing, by the network node at the RAN side, the service corresponding to the UE text-aware service identifier comprises at least one of:
receiving, by the network node at the RAN side, a scheduling policy sent by one of the independent GW, the UE text-aware server or the core network, and performing, by the network node at the RAN side, local resource scheduling according to the scheduling policy; and
receiving, by the network node at the RAN side, quality of service, QoS, information sent by one of the independent GW, the UE text-aware server or the core network, and processing, by the network node at the RAN side, local data transmission resources according to the QoS information.

9. A method for processing a User Equipment, UE, text-aware service, comprising:
establishing (31), by a core network device, one or more dedicated bearers for an Internet connectivity service of UE after receiving a service request of UE;
sending (32), by the core network device, a UE text-aware service identifier and an IP address of an independent Gateway, GW, or of a UE text-aware server to a network node at a Radio Access Network, RAN, side, when the service request of UE indicates a UE text-aware service which implements offloading through the independent GW or the UE text-aware server;
establishing a direct interface between the network node at the RAN side and the independent GW or the UE text-aware server;
wherein, the independent GW has functions of both a serving GW and a data GW which implement the UE text-aware service;
the UE text-aware service is a UE service which implements one or more of local caching, local offloading, and local switching by processing through the independent GW or the UE text-aware server;
the method further comprises:
receiving, by the core network device, a scheduling policy of the independent GW or of the UE text-aware server, and sending, by the core network device, the scheduling policy to the network node at the RAN side; or
receiving, by the core network device, quality of service, QoS, information of the independent GW, and sending, by the core network device, the QoS information to the network node at the RAN side.

10. A core network device comprising means for implementing the method of claim 9.

11. A system for processing a User Equipment, UE, text-aware service, comprising: an independent Gateway, GW, or a UE text-aware server, a network node at a Radio Access Network, RAN, side, and a core network device, wherein,
the GW, or the UE text-aware server is configured to perform the method of any one of claim 1 to 5;
the core network device is configured to perform the method of claim 9;
the network node at the RAN side is configured to:
receive a UE text-aware service identifier sent by the core network device; and
process a service corresponding to the UE text-aware service identifier.

12. The system of claim 11, wherein, the network node at the RAN side is configured to process the service corresponding to the UE text-aware service identifier through the following manner:
receiving an IP address of the independent Gateway, GW, or of the UE text-aware server which is sent by the core network device;
sending an interface establishment request to the independent GW or the UE text-aware server, and establishing an direct interface with the independent GW or the UE text-aware server; and
sending information of the UE text-aware service corresponding to the UE text-aware service identifier to the independent GW or the UE text-aware server through the direct interface.

13. The system of claim 12, wherein, the network node at the RAN side is configured to process the service corresponding to the UE text-aware service identifier through at least one of:
receiving a scheduling policy sent by one of the independent GW, the UE text-aware server or the core network device, and performing local resource scheduling according to the scheduling policy; and
receiving quality of service, QoS, information sent by one of the independent GW, the UE text-aware server or the core network device, and processing local data transmission resources according to the QoS information.

## Patentansprüche

1. Verfahren zum Verarbeiten eines textbewussten Dienstes eines Benutzergerät, UE, umfassend:
Erlangen (11), durch ein unabhängiges Gateway, GW, oder einen textbewussten UE-Server, eines Inhalts des textbewussten UE-Dienstes, wobei der Inhalt des textbewussten UE-Dienstes mindestens eines von Daten des textbewussten UE-Dienstes oder Informationen des textbewussten UE-Dienstes umfasst; und
Ausführen (12), durch das unabhängige GW oder den textbewussten UE-Server, einer lokalen Verarbeitung gemäß dem Inhalt des textbewussten UE-Dienstes;
wobei das unabhängige GW sowohl die Funktionen eines dienenden GW als auch eines Daten-GW aufweist, die den textbewussten UE-Dienst implementieren;
wobei der textbewusste UE-Dienst ein UE-Dienst ist, der eines oder mehrere von einem lokalen Caching, lokalem Offloading und lokalem Switching durch Verarbeiten über das unabhängige GW oder den textbewussten UE-Server implementiert; und
wobei ein Erlangen, durch das unabhängige GW oder den textbewussten UE-Server, der Informationen des textbewussten UE-Dienstes Folgendes umfasst:
Erlangen, durch das unabhängige GW oder den textbewussten UE-Server, der Informationen des textbewussten UE-Dienstes durch eine direkte Schnittstelle, die mit einem Netzwerkknoten auf der Seite eines Funkzugangsnetzwerks, RAN, eingerichtet ist;
wobei ein Ausführen, durch das unabhängige GW oder den textbewussten UE-Server, der lokalen Verarbeitung gemäß den Informationen des textbewussten UE-Dienstes mindestens eines von Folgendem umfasst:
Einstellen, durch das unabhängige GW oder den textbewussten UE-Server, einer Planungsrichtlinie gemäß den Informationen des textbewussten UE-Dienstes, und Senden, durch das unabhängige GW oder den textbewussten UE-Server, der eingestellten Planungsrichtlinie an den Netzwerkknoten auf der RAN-Seite; und
Einstellen, durch das unabhängige GW oder den textbewussten UE-Server, von Parametern einer Dienstgüte, QoS, gemäß den Informationen des textbewussten UE-Dienstes, und Senden, durch das unabhängige GW oder den textbewussten UE-Server, der eingestellten QoS-Parameter an den Netzwerkknoten auf der RAN-Seite oder ein Kernnetzwerk.

2. Verfahren nach Anspruch 1, wobei die QoS-Parameter mindestens eines von Folgenden umfassen:
aggregierte maximale UE-Bitrate, UE AMBR, Trägermarkierungsinformationen, Träger-QoS-Parameter, garantierte Bitrate, GBR, oder UE-IP-Datenflussinformationen.

3. Verfahren nach Anspruch 1, wobei ein Erlangen, durch das unabhängige GW oder den textbewussten UE-Server, der Informationen des textbewussten UE-Dienstes Folgendes umfasst:
Erlangen, durch das unabhängige GW oder den textbewussten UE-Server, von UE-Zusatzinformationen von einem Kernnetzwerk.

4. Verfahren nach Anspruch 1 oder 2, wobei die Informationen des textbewussten UE-Dienstes mindestens eines von Folgenden umfasst:
eine maximale Uplink-Dienstrate, eine maximale Downlink-Dienstrate, eine minimale Uplink-Dienstrate, eine minimale Downlink-Dienstrate, durchschnittlicher Uplink-Dienstratenverkehr, durchschnittlicher Downlink-Dienstratenverkehr, Dienstaktivität und Zelleninformationen eines UE, das von einem Netzwerkknoten auf der RAN-Seite bedient wird.

5. Verfahren nach Anspruch 1, wobei ein Erlangen, durch das unabhängige GW oder den textbewussten UE-Server, der Daten des textbewussten UE-Dienstes Folgendes umfasst:
Erlangen, durch das unabhängige GW oder den textbewussten UE-Server, nach Empfangen einer Anforderung für den Zugriff auf den textbewussten UE-Dienst, von Daten entsprechend der Anforderung von einer Internet-Netzwerk-Quellseite, und Ausführen, durch das unabhängige GW oder den textbewussten UE-Server, von lokalem Caching.

6. Verfahren nach Anspruch 1, ferner umfassend:
Empfangen (21), durch einen Netzwerkknoten auf der Seite eines Funkzugangsnetzwerks, RAN, einer Kennung eines textbewussten UE-Dienstes, die von einem Kernnetz gesendet wird; und
Verarbeiten (22), durch den Netzwerkknoten auf der RAN-Seite, eines Dienstes entsprechend der Kennung des textbewussten UE-Dienstes.

7. Verfahren nach Anspruch 6, wobei ein Verarbeiten, durch den Netzwerkknoten auf der RAN-Seite, des Dienstes entsprechend der Kennung des textbewussten UE-Dienstes Folgendes umfasst:
Empfangen, durch den Netzwerkknoten auf der RAN-Seite, einer IP-Adresse des unabhängigen Gateways, GW, oder des textbewussten UE-Servers, die von dem Kernnetzwerk gesendet wird;
Senden, durch den Netzwerkknoten auf der RAN-Seite, einer Schnittstelleneinrichtungsanforderung an das unabhängige GW oder den textbewussten UE-Server, und Einrichten der direkten Schnittstelle mit dem unabhängigen GW oder dem textbewussten UE-Server; und
Senden, durch den Netzwerkknoten auf der RAN-Seite, der Informationen des textbewussten UE-Dienstes, die der Kennung des textbewussten UE-Dienstes entspricht, an das unabhängige GW oder den textbewusste UE-Server über die direkte Schnittstelle.

8. Verfahren nach Anspruch 7, wobei ein Verarbeiten, durch den Netzwerkknoten auf der RAN-Seite, des Dienstes entsprechend der Kennung des textbewussten UE-Dienstes mindestens eines von Folgenden umfasst:
Empfangen, durch den Netzwerkknoten auf der RAN-Seite, einer Planungsrichtlinie, die von einem von dem unabhängigen GW, dem textbewussten UE-Server oder dem Kernnetzwerk gesendet wird, und Ausführen, durch den Netzwerkknoten auf der RAN-Seite, einer lokalen Ressourcenplanung gemäß der Planungsrichtlinie; und
Empfangen, durch den Netzwerkknoten auf der RAN-Seite, von Informationen über Dienstgüte-, QoS-, die von einem von dem unabhängigen GW, dem textbewussten UE-Server oder dem Kernnetzwerk gesendet werden, und Verarbeiten, durch den Netzwerkknoten auf der RAN-Seite, von lokalen Datenübertragungsressourcen gemäß den QoS-Informationen.

9. Verfahren zum Verarbeiten eines textbewussten Dienstes eines Benutzergerät, UE, umfassend:
Einrichten (31), durch eine Kernnetzwerkvorrichtung, eines oder mehrerer dedizierter Träger für einen Internet-Konnektivitätsdienst von UE nach Empfangen einer Dienstanforderung von UE;
Senden (32), durch das Kernnetzgerät, einer Kennung eines textbewussten UE-Dienstes und einer IP-Adresse eines unabhängigen Gateways, GW, oder eines textbewussten UE-Servers an einen Netzwerkknoten auf der Seite eines Funkzugangsnetzwerks, RAN, wenn die Dienstanforderung des UE einen textbewussten UE-Dienst angibt, der ein Offloading durch das unabhängige GW oder den textbewusste UE-Server implementiert;
Einrichten einer direkten Schnittstelle zwischen dem Netzwerkknoten auf der RAN-Seite und dem unabhängigen GW oder dem textbewussten UE-Server;
wobei das unabhängige GW sowohl die Funktionen eines dienenden GW als auch eines Daten-GW aufweist, die den textbewussten UE-Dienst implementieren;
wobei der textbewusste UE-Dienst ein UE-Dienst ist, der eines oder mehrere von einem lokalen Caching, lokalem Offloading und lokalem Switching durch Verarbeiten über das unabhängige GW oder den textbewussten UE-Server implementiert;
das Verfahren ferner Folgendes umfasst:
Empfangen, durch die Kernnetzwerkvorrichtung, einer Planungsrichtlinie des unabhängigen GW oder des textbewussten UE-Server, und Senden, durch die Kernnetzwerkvorrichtung, der Planungsrichtlinie an den Netzwerkknoten auf der RAN-Seite; oder
Empfangen von Informationen über Dienstgüte, QoS, des unabhängigen GW durch die Kernnetzwerkvorrichtung und Senden der QoS-Informationen durch die Kernnetzwerkvorrichtung an den Netzwerkknoten auf der RAN-Seite.

10. Kernnetzwerkvorrichtung, umfassend Mittel zum Implementieren des Verfahrens nach Anspruch 9.

11. System zum Verarbeiten eines textbewussten Dienstes für ein Benutzergerät, UE, umfassend: ein unabhängiges Gateway, GW, oder einen textbewussten UE-Server, einen Netzwerkknoten auf einer Seite eines Funkzugangsnetzwerks, RAN, und eine Kernnetzwerkvorrichtung, wobei,
das GW oder der textbewusste UE-Server konfiguriert ist, um das Verfahren nach einem der Ansprüche 1 bis 5 auszuführen;
wobei die Kernnetzwerkvorrichtung konfiguriert ist, um sas Verfahren nach Anspruch 9 auszuführen;
der Netzwerkknoten auf der RAN-Seite zu Folgendem konfiguriert ist:
Empfangen einer Kennung eines textbewussten UE-Dienstes, die von der Kernnetzwerkvorrichtung gesendet wird; und
Verarbeiten eines Dienstes entsprechend der Kennung des textbewussten UE-Dienstes.

12. System nach Anspruch 11, wobei der Netzwerkknoten auf der RAN-Seite konfiguriert ist, um den Dienst entsprechend der Kennung des textbewussten UE-Dienstes auf die folgende Weise zu verarbeiten:
Empfangen einer IP-Adresse des unabhängigen Gateways, GW, oder des textbewussten UE-Servers, die von dem Kernnetzwerk gesendet wird;
Senden einer Schnittstelleneinrichtungsanforderung an das unabhängige GW oder den textbewussten UE-Server, und Einrichten einer direkten Schnittstelle mit dem unabhängigen GW oder dem textbewussten UE-Server; und
Senden von Informationen des textbewussten UE-Dienstes entsprechend der Kennung des textbewussten UE-Dienstes, an das unabhängige GW oder den textbewusste UE-Server über die direkte Schnittstelle.

13. System nach Anspruch 12, wobei der Netzwerkknoten auf der RAN-Seite konfiguriert ist, um den Dienst entsprechend der Kennung des textbewussten UE-Dienstes durch mindestens eines von Folgenden zu verarbeiten:
Empfangen einer Planungsrichtlinie, die von einem der unabhängigen GW, dem textbewussten UE-Server oder der Kernnetzwerkvorrichtung gesendet wird, und Ausführen einer lokalen Ressourcenplanung gemäß der Planungsrichtlinie; und
Empfangen von Informationen über Dienstgüte-, QoS-, die von einem von dem unabhängigen GW, dem textbewussten UE-Server oder dem Kernnetzwerk gesendet werden, und Verarbeiten von lokalen Datenübertragungsressourcen gemäß den QoS-Informationen.

## Revendications

1. Procédé de traitement d'un service sensible à un texte d'équipement utilisateur, UE, comprenant :
l'obtention (11), par une passerelle, GW, indépendante ou un serveur sensible à un texte d'UE, d'un contenu du service sensible à un texte d'UE, le contenu du service sensible à un texte d'UE comprenant des données du service sensible à un texte d'UE et/ou des informations du service sensible à un texte d'UE ; et
l'exécution (12), par la GW indépendante ou le serveur sensible à un texte d'UE, d'un traitement local en fonction du contenu du service sensible à un texte d'UE ;
dans lequel, la GW indépendante possède les fonctions à la fois d'une GW de desserte et d'une GW de données qui mettent en œuvre le service sensible à un texte d'UE ;
le service sensible à un texte d'UE est un service d'UE qui met en oeuvre une ou plusieurs fonctions parmi la mise en mémoire cache locale, le délestage local et la commutation locale par un traitement par l'intermédiaire de la GW indépendante ou du serveur sensible à un texte d'UE ; et
l'obtention, par la GW indépendante ou le serveur sensible à un texte d'UE, des informations du service sensible à un texte d'UE comprenant :
l'obtention, par la GW indépendante ou le serveur sensible à un texte d'UE, des informations du service sensible à un texte d'UE par l'intermédiaire d'une interface directe établie avec un nœud de réseau au niveau d'un côté réseau d'accès radio, RAN :
dans lequel l'exécution, par la GW indépendante ou le serveur sensible à un texte d'UE, du traitement local en fonction des informations du service sensible à un texte d'UE, comprend au moins l'une des actions suivantes :
le réglage, par la GW indépendante ou le serveur sensible à un texte d'UE, d'une politique de planification en fonction des informations du service sensible à un texte d'UE, et l'envoi, par la GW indépendante ou le serveur sensible à un texte d'UE, de la politique de planification réglée au nœud de réseau au niveau du côté RAN ; et
le réglage, par la GW indépendante ou le serveur sensible à un texte d'UE, de paramètres de qualité de service, QoS, en fonction des informations du service sensible à un texte d'UE, et l'envoi, par la GW indépendante ou le serveur sensible à un texte d'UE, des paramètres de QoS réglés au nœud de réseau au niveau du côté RAN ou d'un réseau central.

2. Procédé selon la revendication 1, dans lequel les paramètres de QoS comprennent au moins l'un parmi :
des informations de marque de support de débit binaire maximal agrégé d'UE, UE AMBR, des paramètres de QoS de support, des informations de flux de données de débit binaire garanti, GBR, ou UE IP.

3. Procédé selon la revendication 1, dans lequel l'obtention, par la GW indépendante ou le serveur sensible à un texte d'UE, des informations du service sensible à un texte d'UE comprend :
l'obtention, par la GW indépendante ou le serveur sensible à un texte d'UE, d'informations auxiliaires d'UE provenant d'un réseau central.

4. Procédé selon la revendication 1 ou 2, dans lequel les informations du service sensible à un texte d'UE comprennent au moins l'un parmi :
un débit de service de liaison montante maximum, un débit de service de liaison descendante maximum, un débit de service de liaison montante minimum, un débit de service de liaison descendante minimum, un trafic de service de liaison montante moyen, un trafic de service de liaison descendante moyen, une activité de service et des informations de cellules d'un UE qui est desservi par un nœud de réseau au niveau du côté RAN.

5. Procédé selon la revendication 1, l'obtention, par la GW indépendante ou le serveur sensible à un texte d'UE, des données du service sensible à un texte d'UE comprenant :
l'obtention, par la GW indépendante ou le serveur sensible à un texte d'UE après la réception d'une demande d'accès au service sensible à un texte d'UE, de données correspondant à la demande provenant d'un site source de réseau Internet, et l'exécution, par la GW indépendante ou le serveur sensible à un texte d'UE, d'une mise en mémoire cache locale.

6. Procédé selon la revendication 1, comprenant en outre :
la réception (21), par un nœud de réseau au niveau d'un côté réseau d'accès radio, RAN, d'un identifiant de service sensible à un texte d'UE envoyé par un réseau central ; et
le traitement (22), par le nœud de réseau au niveau du côté RAN, d'un service correspondant à l'identifiant de service sensible à un texte d'UE.

7. Procédé selon la revendication 6, dans lequel le traitement, par le nœud de réseau au niveau du côté RAN, du service correspondant à l'identifiant de service sensible à un texte d'UE comprend :
la réception, par le nœud de réseau au niveau du côté RAN, d'une adresse IP de la passerelle, GW, indépendante, ou du serveur sensible à un texte d'UE qui est envoyée par le réseau central :
l'envoi, par le nœud de réseau au niveau du côté RAN, d'une demande d'établissement d'interface à la GW indépendante ou au serveur sensible à un texte d'UE, et l'établissement de l'interface directe avec la GW indépendante ou le serveur sensible à un texte d'UE, et
l'envoi, par le nœud de réseau au niveau du côté RAN, des informations du service sensible à un texte d'UE correspondant à l'identifiant de service sensible à un texte d'UE à la GW indépendante ou au serveur sensible à un texte d'UE par l'intermédiaire de l'interface directe.

8. Procédé selon la revendication 7, dans lequel le traitement, par le nœud de réseau au niveau du côté RAN, du service correspondant à l'identifiant de service sensible à un texte d'UE comprend au moins l'un parmi :
la réception, par le nœud de réseau au niveau du côté RAN, d'une politique de planification envoyée par l'un parmi la GW indépendante, le serveur sensible à un texte d'UE ou le réseau central, et l'exécution, par le nœud de réseau au niveau du côté RAN, d'une planification de ressources locales conformément à la politique de planification ; et
la réception, par le nœud de réseau au niveau du côté RAN, d'informations de qualité de service, QoS, envoyées par l'un parmi la GW indépendante, le serveur sensible à un texte d'UE ou le réseau central, et le traitement, par le nœud de réseau au niveau du côté RAN, de ressources de transmission de données locales conformément aux informations de QoS.

9. Procédé de traitement d'un service sensible à un texte d'équipement utilisateur, UE, comprenant :
l'établissement (31), par un dispositif de réseau central, d'un ou de plusieurs auditeurs dédiés pour un service de connectivité Internet de l'UE après la réception d'une demande de service de l'UE ;
l'envoi (32), par le dispositif de réseau central, d'un identifiant de service sensible à un texte d'UE et d'une adresse IP d'une passerelle, GW, indépendante ou d'un serveur sensible à un texte d'UE à un nœud de réseau au niveau d'un côté réseau d'accès radio, RAN, lorsque la demande de service sensible à un texte d'UE indique un service sensible à un texte d'UE qui met en œuvre le délestage par l'intermédiaire de la GW indépendante ou du serveur sensible à un texte d'UE ;
l'établissement d'une interface directe entre le nœud de réseau au niveau du côté RAN et la GW indépendante ou le serveur sensible à un texte d'UE ;
dans lequel, la GW indépendante possède les fonctions à la fois d'une GW de desserte et d'une GW de données qui mettent en œuvre le service sensible à un texte d'UE ;
le service sensible à un texte d'UE est un service d'UE qui met en œuvre une ou plusieurs fonctions parmi la mise en mémoire cache locale, le délestage local et la commutation locale par un traitement par l'intermédiaire de la GW indépendante ou du serveur sensible à un texte d'UE ;
le procédé comprend en outre :
la réception, par le dispositif de réseau central, d'une politique de planification de la GW indépendante ou du serveur sensible à un texte d'UE, et l'envoi, par le dispositif de réseau central, de la politique de planification au nœud de réseau au niveau du côté RAN ; ou
la réception, par le dispositif de réseau central, d'informations de qualité de service, QoS, de la GW indépendante, et l'envoi, par le dispositif de réseau central, des informations de QoS au nœud de réseau au niveau du côté RAN.

10. Dispositif de réseau central comprenant un moyen pour mettre en œuvre le procédé selon la revendication 9.

11. Système de traitement d'un service sensible à un texte d'équipement utilisateur, UE, comprenant : une passerelle, GW, indépendante ou un serveur sensible à un texte d'UE, un nœud de réseau au niveau d'un côté réseau d'accès radio, RAN, et un dispositif de réseau central, dans lequel,
la GW, ou le serveur sensible à un texte d'UE est configuré pour exécuter le procédé selon l'une quelconque des revendications 1 à 5 :
le dispositif de réseau central est configuré pour exécuter le procédé selon la revendication 9 ;
le nœud de réseau au niveau du côté RAN est configuré pour :
recevoir un identifiant de service sensible à un texte d'UE envoyé par le dispositif de réseau central ; et
traiter un service correspondant à l'identifiant de service sensible à un texte d'UE.

12. Système selon la revendication 11, dans lequel, le nœud de réseau au niveau du côté RAN est configuré pour traiter le service correspondant à l'identifiant de service sensible à un texte d'UE de la manière suivante :
la réception d'une adresse IP de la passerelle, GW, indépendante, ou du serveur sensible à un texte d'UE qui est envoyée par le dispositif de réseau central :
l'envoi d'une demande d'établissement d'interface à la GW indépendante ou au serveur sensible à un texte d'UE, et l'établissement d'une interface directe avec la GW indépendante ou le serveur sensible à un texte d'UE ; et
l'envoi d'informations du service sensible à un texte d'UE correspondant à l'identifiant de service sensible à un texte d'UE à la GW indépendante ou au serveur sensible à un texte d'UE par l'intermédiaire de l'interface directe.

13. Système selon la revendication 12, dans lequel, le nœud de réseau au niveau du côté RAN est configuré pour traiter le service correspondant à l'identifiant de service sensible à un texte d'UE par l'intermédiaire d'au moins une action parmi :
la réception d'une politique de planification envoyée par l'un parmi la GW indépendante, le serveur sensible à un texte d'UE ou le dispositif de réseau central, et l'exécution d'une planification de ressources locales conformément à la politique de planification ; et
la réception d'informations de qualité de service, QoS, envoyées par l'un parmi la GW indépendante, le serveur sensible à un texte d'UE ou le dispositif de réseau central, et le traitement de ressources de transmission de données locales conformément aux informations de QoS.
